# EUROPEAN PATENT APPLICATION

(11) **EP 2 439 495 A1**
(43) Date of publication of application: **11.04.2012**
(21) Application number: 10013325.5
(22) Date of filing: 05.10.2010
(51) Int. Cl.: G01D 4/00

(54) **Network for communicating meter data**

(71) Applicant: iLEDs GmbH, 14532 Kleinmachnow (DE)
(72) Inventor: Ramin, Leave Mokhtari, 14532 Kleinmachnow (DE); Ortwin, Lang, 30880 Laatzen (DE)
(74) Representative: Kinkeldey, Daniela

(57) **Abstract**

A network for communicating data to and from a gateway is provided that includes at least one metering device for metering the consumption of a resource, at least one gateway and/or gate server and at least one lighting unit. The at least one gateway and/or gate server is configured for electronically coupling to the at least one metering device and includes a first data communication unit. The at least one lighting unit includes a second data communication unit and a processing unit configured for establishing a first data connection between the first data communication unit and the second data communication unit.

## Description

The present invention relates to a network for communicating data to and from a gateway, and in particular to a network of a metering device, gateway and lighting unit to communicate meter data from the metering device to a computing device.

### Background of the invention

Most facilities, such as a building, apartment, household or other unit of a building is provided with one or more resources, such as electricity, gas, water, etc. To measure the consumption of these resources, a meter or metering device is installed within the conduct of the resource. For example, an electricity meter is installed within the electric cable supplying the building or apartment or other part of the building with electricity.

A conventional metering device has a mechanical meter and an analog or mechanical counter display. The counter is then read by a person of the resource supplier to prepare billing for the consumption of the resource. Usually, an employee of the resource supplier, such as the electricity supplier, reads the meter after a predefined period of time, e.g. each year.

Recently, metering devices are equipped with a digital meter or counter of the resource consumption. Such metering devices include a digital display for displaying the consumption of the resource summarized for a predefined interval or since installation of the meter.

A further variation of metering devices includes an interface to digitally read out meter data, i.e. the counter value at a specific point of time, with an electronic reading unit. For example, the person in charge of reading the meters for the resource supplier can attach the electronic reading unit to the interface of the metering device to read out the current counter value.

Other electronic metering devices further provide for wireless reading of the digital counter value. This allows the reading of metering devices from a distance, i.e. without entering the building or property, where the meter is installed. As an example, the person in charge of reading all metering devices in a street can drive through the street to read out all nearby metering devices in any facility without leaving the car and without the necessity of entering a facility or property.

All these methods of reading the counter value of metering devices are cumbersome. For instance, if a person needs to access each metering device to either read the analog or digital counter is time intensive and, thus, expensive. The method of a service car driving down a street and wirelessly reading the counters of the metering devices has the drawback that not each metering device may be read wirelessly due to interferences or other objects blocking a wireless transmission, such as parking cars, metal fences etc. In addition, the service car needs to drive slowly to connect to each metering device. However, this may block the remaining traffic on the street and is therefore not an ideal solution.

### Summary of the invention

It is therefore an object of the present invention to provide a reliable and cost efficient system to read data from metering devices.

This object is solved by the present invention as claimed in the independent claim 1.

Preferred embodiments are defined by the dependent claims.

According to a preferred embodiment of the present invention, a network for communicating data to and from a gateway includes at least one metering device, at least one gateway or gate server, and at least one lighting unit. The metering device is configured for metering the consumption of a resource, while the at least one gateway is configured for electronically coupling to the at least one metering device. The gateway further includes a first data communication unit. The at least one lighting unit comprises a second data communication unit and a processing unit to establish a first data connection between the first data communication unit and the second data communication unit. This embodiment has the advantage that lighting units can be installed within the range of the data communication unit of the gateway, while still illuminating a desired area.

In accordance with an embodiment of the present invention, the network further comprises a first computing device coupled to a wide area network for data communication. The processing unit of the at least one lighting unit is further configured for establishing a second data connection between the second data communication unit and the wide area network. This is advantageous, since a connection to a central computer can be established and a service person does not need to access the metering device.

With respect to another embodiment, the second data connection is either a direct data connection to an access point of the wide area network or comprises a connection to the second data communication unit of at least one further lighting unit and a data connection between one of the at least one further lighting unit to an access point of the wide area network. The advantage of this embodiment is the reliable connectivity to the wide area network using alternative routes.

According to another embodiment, the at least one gateway further comprises a data reading unit configured for reading meter data from the at least one metering device. The processing unit of the at least one lighting unit is further configured for retrieving the meter data from the at least one gateway via the first data connection. The processing unit then transmits the retrieved meter data to the first computing device via the second data connection and the wide area network. Meter data may comprise consumption data indicating the metered consumption of the resource. This embodiment allows for an inexpensive communication of meter data to a centrally located computing device.

According to a further embodiment, the network comprises a second computing device that is configured for transmitting resource information to the at least one lighting unit via the wide area network and the second data connection. The processing unit of the at least one lighting unit is configured for transmitting the resource information to the at least one gateway via the first data connection. This is particularly advantageous due to the implementation of a two-way connection to and from the gateways to additionally provide data to the gateway for further controlling devices based on this data.

According to embodiments of the present invention the at least one metering device comprises a storage unit configured for storing data on the consumption of a resource. Further, the gateway is further configured for encrypting data on the consumption of a resource. Additionally or alternatively, the processing unit of the at least one lighting unit is configured for communicating data via the first and/or second data connection in encrypted form. This allows for data privacy and secure data communication of meter data.

In accordance with other embodiments, the first and/or second data connection is a wireless data connection. The first and/or second data connection may be a wireless local area network connection (WLAN) and/or ZigBee connection and/or WiFi connection and/or UMTS connection and/or GPRS connection and/or power line connection.

Moreover, the at least one metering device comprises one of said at least one gateway in accordance with an embodiment of the invention.

According to an embodiment, the resource is electricity and/or gas and/or water and/or district heating and/or bandwidth of a telecommunication connection and/or of a television connection and/or of a cable connection. The consumption data indicates the consumption of the resource during a period of time.

### Brief description of the drawings

In order to describe the manner in which the above recited and other advantages and features can be obtained, a more particular description of the subject matter briefly described above will be rendered by reference to specific embodiments, which are illustrated in the appended drawings. Understanding that these drawings depict only typical embodiments and are not therefore to be considered to be limiting in scope, embodiments will be described and explained with additional specificity and detail through the use of the accompanying drawings, in which:
- Figure 1: depicts a network for communicating data to and from a gateway and/or metering devices according to an embodiment of the invention;
- Figure 2: illustrates a metering device and its components in accordance with an embodiment;
- Figure 3: illustrates a gateway and its components according to an embodiment of the present invention; and
- Figure 4: illustrates a lighting unit and its components in accordance with an embodiment.

### Detailed description of the invention

The present invention provides a system and network of devices and units that establish various data connections between each other to communicate data to and from metering devices and/or gateways. This system and/or network includes metering devices, gateways, lighting units and further computing devices, which will be explained in more detail below.

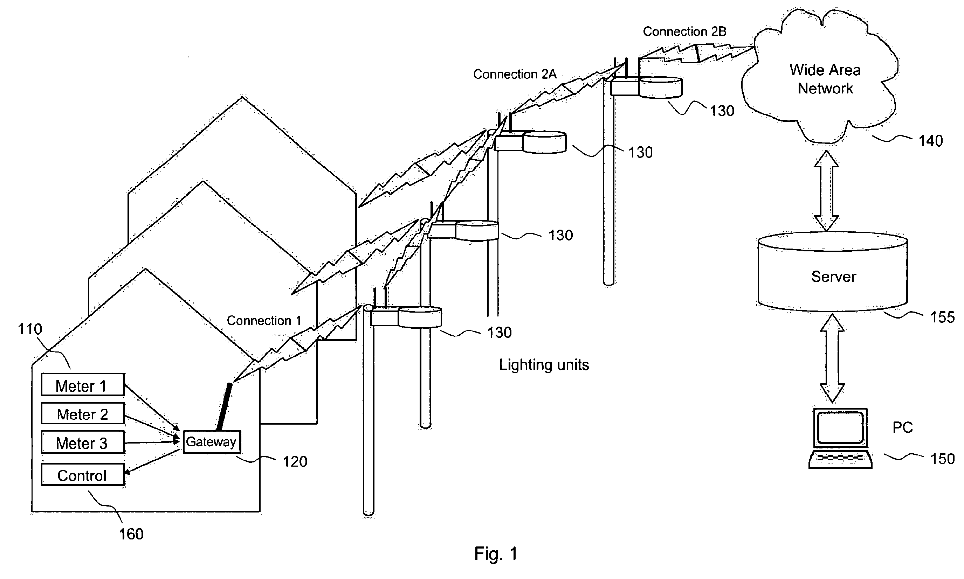

Referring to Figure 1, a network according to an embodiment of the present invention is depicted. In a brief overview the network includes one or more metering devices 110, a gateway 120, one or more lighting units 130, a computing device 150 and/or a wide area network 140.

Figure 1 illustrates three facilities depicted as houses, which can be buildings, houses, office buildings, garages as well as public facilities, such as a parking lot, a park or even a distribution point for a resource. The present invention is not restricted to these facilities. As will be appreciated by the person skilled in the art, any facility consuming some resource that can be metered falls within the scope of the present invention.

Such resources are electricity, gas, water and/or district heating. According to another embodiment of the present invention, the metering of a resource is not restricted to the above energy-like resources, but also includes resources of particular services. As an example, a service resource is the bandwidth of a connection. Such connection can be a telecommunication connection, television connection and/or cable connection. A connection includes a cable, line or satellite equipment providing the respective service. Further, the bandwidth of such connections can be specified in available data units per time, e.g. Mbytes per second, or can be specified as the available time for consumption.

Each meter is capable of measuring or metering the consumption of the particular resource the meter is built for. As an example only, metering device 110 is for measuring the power consumption of an electricity line for a particular apartment. Such metering device will sum up the consumed energy, such as the consumed kilowatt hours. In case of a metering device for water, the consumption would be measured as cubic meters, cubic feet or any other volumetric unit.

The consumption of the resources can be measured in corresponding data units or the time that the resource has been used. For example, electricity is metered as kilowatt hours, water or gas as cubic meters and the bandwidth of a telecommunication connection as a particular amount of bytes. Further, the bandwidth of a television or cable connection may be measured as the amount of transmitted and/or received bytes, but also as the time that the particular connection has been used. As an example only, a pay-TV channel may be metered by time or by the number of shows that have been watched.

As can be seen in Figure 1, three different meter devices are depicted, for example, one for electricity, one for water and the third one for bandwidths of a digital subscriber line (DSL). As will be appreciated by the person skilled in the art, the present invention is not limited to the number of metering devices per facility as depicted in Figure 1, but may include any number of metering devices.

According to another embodiment, each of the metering devices referred to as "Meter 1", "Meter 2" and "Meter 3" is a metering device for one apartment within a building. Further, one metering device may be installed to meter the public consumption of a resource, such as electricity of a stairway and/or an elevator.

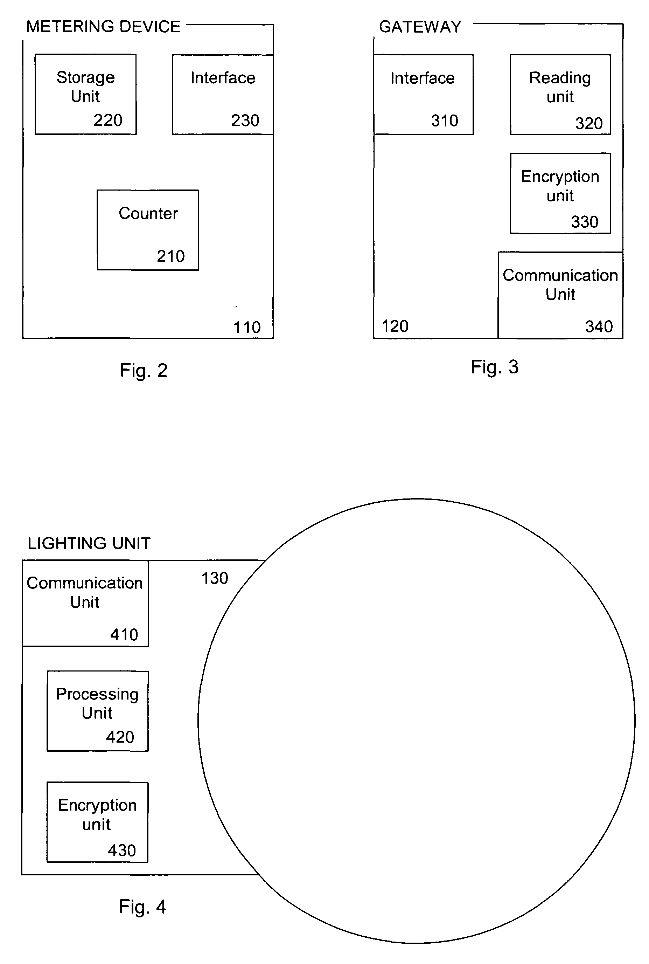

A metering device 110 according to an embodiment of the present invention is depicted in Figure 2. Such metering device 110 comprises a counter 210, which counts the consumed resource. The counter 210 is either an analog or digital counter capable of counting particular units of the consumed resource. As an example only, consumed kilowatt hours or cubic meters are counted by the counter 210.

In case of a digital counter 210, the metering device 110 includes a digital storage unit 220 to store the counted resource consumption. It has to be noted that the present invention is not restricted to a separate counter 210 and storage unit 220. It is also within the scope of the invention that the storage unit 220 is integrated in the counter 210. In any case, the metering device 110 provides for reading the metered resource.

As mentioned above, a conventional metering device provides for analog or digital displaying of the consumed resource. Thus, a person has to go to the metering device 110 and read the displayed consumption of the resource for billing purposes.

Opposed to that, the present invention provides for reading out the metered resource consumption via an interface 230 of the metering device 110. Such interface 230 may be implemented as a bus, bus connector, connection points for electronic coupling or a wireless interface. Examples of a possible interface are a serial bus, parallel bus, universal serial bus (USB). These busses allow connecting devices using the universal plug and play (UPnP) protocol. In any case, a device, such as a reading unit, can be connected to the metering device 110 using the interface 230. This connection may be established as a cable connection or as a wireless connection.

In accordance with an embodiment, the metering device includes an encrypting unit (not shown) to secure any data. The data can be encrypted using common encryption techniques, such as 128-bit encryption.

Referring back to Figure 1, a gateway is depicted within the proximity of the metering devices 110. A gateway is capable of connecting to at least two devices. It acts as a bridge between the at least two devices for data communication, such as between a metering device and a network infrastructure device. In case of a plurality of metering devices connected to the gateway, it is also referred to as a gate server. Such a gateway and/or gate server 120 is further illustrated in Figure 3.

According to the embodiment illustrated in Figure 3, a gateway 120 includes an interface 310. This interface allows for electronically coupling to a metering device. As an example only, the interface 310 of the gateway 120 may be the same interface 230 of metering device 110, so that an electronic coupling of the metering device 110 and the gateway 120 is possible. Such connection or coupling is then established via a cable connection.

According to another embodiment, the interfaces 230 and 310 are wireless interfaces. In this case, the metering device 110 and gateway 120 establish a wireless connection to transfer data between the two devices.

With respect to Figure 3, the gateway 120 further includes a reading unit 320 to read meter data from the metering device 110. The reading unit 320 is capable of communicating with the storage unit 220 and/or the counter 210 via the interfaces 230 and 310 to read the metered consumption of the resource. This reading of meter data is performed at predetermined time intervals, such as once a day, once a week, once a month etc. It has to be noted that shorter or longer time intervals also fall within the scope of the present invention.

According to another embodiment, the gateway 120 is capable of coupling to a plurality of metering devices via its interface 310. In case of a wired coupling, the interface 310 is built for providing a plurality of wired connections to a plurality of metering devices 110. In case of a wireless connection, the interface 310 is capable of establishing a plurality of wireless connections to a plurality of metering devices 110 concurrently.

As will be appreciated by the person skilled in the art, a gateway 120 may also establish a connection to one metering device at a time. Thus, after reading the meter data from a first metering device 110, it couples to a second metering device and reads the second meter data and so forth.

Again with respect to Figure 3 a gateway further includes an encryption unit 330 to allow for encrypting any read meter data. Thus, the gateway 120 is capable of protecting the data and hence allows for data security and data privacy.

A further component of gateway 120 is a communication unit or data communication unit 340. This data communication unit 340 is adapted to build up a data connection to a further communication unit. The communication unit 340 is a wired data communication unit and/or a wireless data communication unit. As an example only, a wired data communication unit may establish a data connection employing a digital subscriber line (DSL) infrastructure or a power line communication.

In a preferred embodiment of the present invention the data communication unit 340 is a wireless communication unit. This wireless data communication unit 340 can work in the regime of different frequency bands, such as 434 MHz, 868 MHz or 2.4 GHz. As will be appreciated by the person skilled in the art, combinations of frequencies or other frequency bands or further wireless technologies fall within the scope of the present invention. Thus, the data communication unit 340 is not restricted to the above-mentioned frequencies.

The wireless data communication unit 340 is therefore capable of establishing a wireless data connection. The data connection is a wireless local area network connection (WLAN connection), and/or a ZigBee connection and/or a WiFi connection. The present invention is not restricted to these types of data connection but also includes other data communication standards, such as Bluetooth.

According to another embodiment, a metering device 110 includes the gateway 120 or at least the components of the gateway 120. In this case, the interfaces 230 and 310 may be omitted since the reading unit 320 can be installed in the metering device 110 or may even be omitted if a storage unit 220 is present to hold the meter data.

Referring back to Figure 1, the metering devices 110 and gateway 120 have been discussed in detail above. The meter data, i.e. the data indicating the consumption of the metered resource at a specific point of time or during a predefined period of time, has been stored within each metering device 110 and/or has been read by the gateway 120. Thus, meter data of at least one metering device 110 is available for further processing.

According to a preferred embodiment of the present invention, the system and network depicted in Figure 1 include at least one lighting unit 130. This lighting unit is mounted to a pole or at a wall or other structural element. It is connected to a power circuit to be supplied with electric power. In accordance with an embodiment, the power supply of the lighting unit 130 is independent of the power supply of metering devices 110 and/or gateway 120. As an example only, the lighting units 130 can be street lights installed by the public utility company.

As will be appreciated, the lighting unit 130 is installed within the proximity of gateway 120. In case where the metering devices 110 are capable of communicating with other devices without the employment of gateway 120, the lighting unit 130 is installed within the proximity of the metering devices 110. The term proximity of the lighting unit 130 has to be interpreted in view of wireless data communication standards.

As will be explained in more detail below, the lighting units 130 are capable of wired and/or wireless data communications. In case of wireless data connections, the maximum distance between wireless data communication units is dependent on the employed wireless communication standard such as WLAN, ZigBee, Bluetooth and/or WiFi connections. For example, a Bluetooth connection can be established within a maximum range of five to twenty meters, while a WLAN connection may be established within a maximum range of 100 or even 200 meters. In case of a wired data connection, the distance between gateway 120 and lighting unit 130 can even be extended. However, such wired connection needs further installation of a data cable, which might not be preferable.

With respect now to Figure 4, a lighting unit 130 is illustrated in more detail and will be described below. Each lighting unit 130 includes a data communication unit 410 (also referred to as communication unit or communication component). The data communication unit 410 provides for establishing a data connection in accordance with a predefined data communication standard. As outlined above, these standards may be wired or wireless standards. In case of a wireless communication standard, the data communication unit 410 may work under the protocol of WLAN, ZigBee, Bluetooth and/or any other wireless data communication protocol.

The lighting unit 130 includes a processing unit 420 (also referred to as central processing unit or CPU). This processing unit 420 is configured for establishing a first data connection between the data communication unit 410 and another data communication unit of another device.

In a preferred embodiment, a first data connection established by lighting unit 130 is with gateway 120. In this case, the processing unit 420 establishes the first data connection using data communication unit 410 of lighting unit 130 and data communication unit 340 of gateway 120. This first data connection is a two-way connection that allows for data communications from and to the lighting unit 130. The establishing of the first data connection may include handshake protocol steps and/or exchange of encryption keys for a secure data connection between the communication units 410 and 340. These protocol steps depend on the employed data communication protocol. It has to be noted that the present invention is not limited to a certain number of protocol steps as outlined above. Rather, all protocol steps necessary to establish a data connection between two communication units (410 and 340) will be performed.

According to a preferred embodiment of the present invention, after establishing the first data connection between gateway 120 and lighting unit 130, the processing unit 420 of the lighting unit 130 retrieves meter data from gateway 120. The retrieval of meter data includes the polling of any data available at gateway 120. For instance, the processing unit 420 of lighting unit 130 sends a data request to gateway 120 to retrieve all meter data that is read by reading unit 320 of the gateway 120.

In accordance with an embodiment the lighting unit is centrally controlled, so that it is switched off during the day. Thus, a data connection to the gateway 120 is not possible at any time. Only when the lighting unit is switched on, the processing unit 420 of the lighting unit is able to connect to gateways 120 and/or metering devices 110. The present invention accounts for such situations, since the metering devices and/or gateways are capable of storing meter data until it is fetched or polled by a lighting unit.

The advantage of the above-described procedure is that meter data of a predetermined amount of meters can be collected by a lighting unit, which is easier accessible than the metering devices 110 and/or the gateway 120. In detail, the metering devices 110 and gateway 120 are usually within a building or other facility to which a person who wants to read the meter data does not have access. Even when employing wireless data connections, the establishing of a connection between the gateway 120 and a mobile unit carried by the person in charge may not be established due to inferences, blocking objects etc. As an example only, the metering devices 110 and gateways 120 may be installed at a factory, where the distance between the gateway and a public area, such as a street, is too far to establish a wireless data connection. On the other hand, even if the distance would be short enough, a plurality of metal objects such as metal fences, machinery, cranes etc. may not allow the establishing of a stable wireless data connection to read meter data.

The present invention, on the other hand, allows for installing a lighting unit within the range of the wireless data communication unit 340 of gateway 120. A further advantage of lighting units is the height in which a lighting unit is usually installed. For instance, a lighting unit may be installed at the wall of a building or on a pole, for example on a parking lot, so that metal objects, such as fences and cars, interfere less than with a communication unit at ground level.

With respect to Figure 4, the lighting unit 130 may further comprise an encryption unit 430 to encrypt any data communication with another data communication unit. As an example only, the first data connection between gateway 120 and lighting unit 130 may be established in an encrypted form such as employing the secure socket layer, SSL, protocol. It has to be noted that other encryption standards can be employed to establish a secure and encrypted wireless data connection.

According to another embodiment, the data communication unit 410 may include the encryption unit 430 to establish secure data connections. According to another embodiment, the processing unit 420 may also be part of the communication unit 410. Thus, compact components can be installed within lighting unit 130.

In accordance with an embodiment of the present invention the lighting unit 130 is equipped with light emitting diode (LED) units which need a low voltage direct current power supply. This low voltage direct current can also be used for the components of the lighting unit, i.e. data communication unit 410, processing unit 420 and encryption unit 430. Thus, the lighting unit can be equipped with common standard products which make the lighting unit inexpensive to produce.

Referring back to Figure 1, as described above, a first data connection, referred to as "Connection 1", is established between gateway 120 and lighting unit 130. This allows for transmitting and receiving data between gateway and lighting unit. For example, lighting unit 130 retrieves meter data indicating the consumption of at least one resource via gateway 120.

In accordance with an embodiment of the present invention, the lighting unit 130 is additionally capable of establishing a second data connection. This second data connection may be established using data communication unit 410. In accordance with another embodiment, the lighting unit 130 includes a further data communication unit (not shown) to establish the second data connection. In case the same data transmission protocol is used for the first and the second data connection, only one data communication unit 410 may be employed for both connections.

The second data connection is directed to a computing device, such as PC 150 and/or server 155. This second data connection will be described in more detail below. In any case, the processing unit 420 of lighting unit 130 is further configured to transmit any meter data retrieved from a gateway 120 to the PC 150 or server 155.

In accordance with a preferred embodiment, the second data connection established by lighting unit 130 is a direct connection to an access point of the wide area network. The access point of the wide area network may be a WLAN access point which has a further connection to the wide area network 140. According to another embodiment, the access point is a base station of a mobile telecommunication system. For example, a data communication unit of the lighting unit 130 works according to one of the standards EDGE, GPRS, UMTS and G4. In this case, lighting unit 130 establishes a data connection between its data communication unit 410 and the wide area network employing a base station of a mobile telecommunication provider and employing one of the above standards.

When the second data connection is established, the lighting unit 130 is capable of transmitting all retrieved meter data to the computing device 150 and/or server 155.

In accordance with another embodiment of the present invention, the second data connection includes two types of data connections which are depicted as "Connection 2A" and "Connection 2B".

The first part of the second data connection is between two or more lighting units as depicted in Figure 1. For instance, the lighting units 130 are capable of establishing a data connection between each other. Therefore, the lighting units 130 can use the data communication unit 410 to establish these connections.

Again, depending on the distance between the lighting units, different standards to establish a wireless data connection can be employed. As outlined above, WLAN connections may be established over a distance of more than 100 meter, while a Bluetooth connection may only be established within a range of five to twenty meters.

In a preferred embodiment, the data communication unit 410 of the lighting units uses the same standard to establish the first data connection, i.e. between gateway 120 and lighting unit 130, and between two lighting units 130. This has the advantage that these first and second data connections can be established with a single unit based on common technology products. Thus, the lighting unit can be produced in a non-expensive way.

In a further embodiment, the first data connection between gateway 120 and lighting unit 130 employs a particular data communication standard while the lighting units use a different standard to establish a data connection of type 2A between the lighting units.

Thus, the network of lighting units and gateways is capable of retrieving a plurality of meter data from the plurality of metering devices 110 via gateways 120 of different facilities. Each lighting unit is further able to transmit the retrieved meter data within the network of lighting units based on data connection of type 2A, i.e. between two lighting units.

According to an embodiment of the present invention, one of the lighting units 130 is capable of establishing the data connection of type 2B, i.e. to the computing device 150. As an example only, the "connection 2B" is established to an access point of the wide area network 140 through which the computing device 150 and/or server 155 can be reached. The network of lighting units 130 is therefore capable of forwarding a plurality of meter data to a central computing device. This has the advantage of an automatic reading of meter data and thus collection of meter data of a plurality of facilities. A further advantage is that lighting units 130 are usually installed within the transmission range of gateways 120 and their communication units 340. As an example only, a street of residential houses usually has one streetlight for not more than three residential houses. Thus, the maximum distance between the streetlight to a residential house falls within the transmission range of the data communication unit 340 of the gateway 120 and the data communication unit 410 of the lighting unit 130.

When employing a network of lighting units, i.e. establishing data connections of type 2A, all meter data from one or more streets can be communicated via the network of lighting units, i.e. the streetlights. A resource supplier, such as a power supplier, is then able to retrieve the meter data via the network of lighting units as described above.

In accordance with another embodiment, computing device 150 may be a mobile computing device capable of establishing a data connection, such as a laptop, personal digital assistant (PDA), smart-phone, netbook etc. In this case, lighting unit 130 may establish a direct connection to computing device 150. Such direct connection may employ a wired connection and/or a wireless data connection using one of the above-mentioned standards (WLAN, ZigBee, Bluetooth, etc.). With this direct connection, the lighting unit 130 is capable of transmitting the retrieved meter data to the computing device 150. As an example only, such mobile computing device 150 can be installed in a service car which drives to the lighting unit 130. The mobile computing device 150 then establishes a connection to the lighting unit 130 to retrieve the meter data transmitted by the lighting unit.

The advantage of the present invention is that the person does not need to drive through each street, i.e. wait in front of each facility or house to read the meter data. The person rather goes to specific lighting units where the meter data of a plurality of metering devices can be retrieved. Thus, the route that the person has to drive is shorter and can be optimized.

In accordance with a further embodiment, the lighting units retrieve meter data from the gateways 120 at different times to avoid interferences of the established data connections and to avoid data congestions when transmitting meter data of a plurality of metering devices 110. For this reason the lighting units can negotiate a time schedule specifying which lighting unit establishes data connections at which time and to which device. As an example, every fifth lighting unit or only lighting units having a minimum distance to each other establish a data connection to a gateway and/or metering device. After retrieving the meter data, it disconnects. Then the next lighting units operate in the same manner. According to an embodiment, just before disconnecting its data connections a lighting unit signals to the neighboring lighting units that it has completed its meter data download. Additionally or alternatively, the lighting unit forwards the retrieved meter data to the next lighting unit with an indication that it will shut down its data connections.

According to another embodiment, when employing a data communication unit 410 in a lighting unit 130 that is capable of using telecommunication standards such as 2G, 3G or G4, the meter data can also be transmitted to another mobile unit if the wide area network cannot be reached. As an example only, the lighting unit may send the meter data using technologies such as short message system (SMS) to communicate the meter data to a mobile service unit. Such mobile service unit may be a mobile communication device such as a smart-phone of a person collecting meter data.

Referring back to Figure 1, the present invention allows for a further data communication according to an embodiment. In detail, the network of lighting units can be employed to transmit information from a central computing device to each gateway 120. This central computing device may be computing device 150 or can be another computing device connected to wide area network 140. This central computing device may provide resource information, i.e. information in relation to the provided resource. As an example only, if the resource is electricity, the resource information may be a price per unit (like cents per kilowatt hour) during a specified time period. For instance, electricity is usually cheaper during the night, where the overall consumption is less than during the day. Thus, the resource information can be a list of prices per kilowatt hours during specified time periods of a day, a week, a month or a year. The resource information may represent a price schedule with grid unit of 15 minutes. Other time spans are also within the scope of the present invention. In case the resource is a bandwidth of a television connection, the resource information may include data such as a program guide or specific information on pay-per-view items and the cost for the programs and/or pay-per-view items.

According to an embodiment of the invention, such resource information is transmitted from a computing device to the network of lighting units 130. Dependent on the type of connection between the network of lighting units 130 and the wide area network, the resource information may be transmitted via the wide area network, the second data communication of type A and/or B. Each lighting unit that has a first data connection to a gateway 120 forwards the resource information to the gateway 120. According to another embodiment, the resource information can be addressed to particular gateways 120. Thus, only the lighting unit 130 with access to the particular addressed gateway 120 forwards the resource information to these gateways 120.

Each gateway 120 receiving resource information may provide this information to a control unit 160. According to another embodiment, the gateway 120 is capable of controlling particular devices based on the received resource information. As an example only, the control unit 160 can switch on or switch off particular devices within a household based on the resource information. For instance, if the resource information indicates that the kilowatt hour is cheapest between 11:00 p.m. and 5:00 a.m., it may control devices such as a washing machine, dishwasher or a boiler to heat up water during this time. Thus, the devices which do not need to run at specific times of the day can be controlled by control unit 160 so that these devices only consume energy when it is cheapest.

In accordance with another embodiment, each device includes a control unit. Thus, each device can be provided with some intelligence to operate in accordance with the resource information. This allows for reducing costs for resource and to reduce peaks within the consumption of the resources, which is advantageous for the consumer and the supplier of the resource.

Another example would be a freezer or refrigerator that needs to start at a particular time to further cool down the interior of the refrigerator or freezer. If the control unit 160 detects that power would be cheaper in about ten minutes, the control unit 160 can switch off the refrigerator and/or freezer for the next ten minutes and then switch on these devices again so that they use the cheaper power. As mentioned above intelligent devices can also provide for the decision when to operate, i.e. consuming a resource.

As has been shown above, the present invention provides for data communications from metering devices via lighting units to a computing device. These data communications may further include a gateway to collect meter data of a plurality of metering devices and to communicate with a first lighting unit. Moreover, a network of lighting units may be employed which can communicate with each other to transmit meter data between the lighting units. At least one lighting unit is further capable of communicating with a computing device employing a further data connection.

As will be appreciated by the person skilled in the art, the above-described embodiments do not restrict the scope of the present invention. The invention further comprises all possible combinations of the described embodiments and examples.

## Claims

1. A network for communicating data to and from a gateway, the network comprising:
at least one metering device configured for metering the consumption of a resource;
at least one gateway and/or gate server configured for electronically coupling to said at least one metering device, said gateway comprising a first data communication unit; and
at least one lighting unit comprising:
a second data communication unit; and
a processing unit configured for establishing a first data connection between said first data communication unit and said second data communication unit.

2. The network of claim 1, wherein the network further comprises:
a first computing device coupled to a wide area network for data communication;
wherein said processing unit is further configured for establishing a second data connection between said second data communication unit and said wide area network.

3. The network of claim 2, wherein said second data connection comprises a direct data connection to an access point of the wide area network or comprises a connection to the second data communication unit of at least one further lighting unit and a data connection between one of said at least one further lighting unit to an access point of the wide area network.

4. The network of claim 2 or 3, wherein said at least one gateway further comprises a data reading unit configured for reading meter data from said at least one metering device; and
wherein said processing unit is further configured for retrieving said meter data from said at least one gateway via said first data connection and transmitting said retrieved meter data to said first computing device via said second data connection and said wide area network, wherein said meter data comprises consumption data indicating said metered consumption of said resource.

5. The network of one of claims 2 to 4, wherein the network further comprises:
a second computing device coupled to said wide area network for data communication;
wherein said second computing device is configured for transmitting resource information to said at least one lighting unit via said wide area network and said second data connection, and wherein the processing unit of said at least one lighting unit is further configured for transmitting said resource information to said at least one gateway via said first data connection.

6. The network of one of claims 1 to 5, wherein said at least one metering device comprises a storage unit configured for storing data on the consumption of a resource.

7. The network of one of claims 1 to 6, wherein said at least one gateway is further configured for encrypting data on the consumption of a resource.

8. The network of one of claims 1 to 7, wherein said processing unit is further configured for communicating data via said first and/or second data connection in encrypted form.

9. The network of one of claims 1 to 8, wherein said first and/or second data connection is a wireless data connection.

10. The network of one of claims 1 to 9, wherein said first and/or second data connection is a Wireless Local Area Network, WLAN, connection and/or ZigBee connection and/or WiFi connection and/or UMTS connection and/or GPRS connection and/or power line connection.

11. The network of one of claims 1 to 10, wherein said at least one metering device comprises one of said at least one gateway.

12. The network of one of claims 1 to 11, wherein said resource is electricity and/or gas and/or water and/or district heating and/or bandwidth of a telecommunication connection and/or of a television connection and/or of a cable connection, and wherein said consumption data indicates the consumption of said resource during a period of time.
